(19) Europäisches Patentamt / European Patent Office / Office européen des brevets

(11) **EP 3 982 229 B1**

(12) **EUROPEAN PATENT SPECIFICATION**

(45) Date of publication and mention
of the grant of the patent:
**21.02.2024 Bulletin 2024/08**

(21) Application number: **21201620.8**

(22) Date of filing: **08.10.2021**

(51) International Patent Classification (IPC):
***G05D 23/19*** *(2006.01)*

(52) Cooperative Patent Classification (CPC):
**G05D 23/1904**

(54) **DIGITAL CONTROL WITH THERMOSTAT FUNCTION**

DIGITALE STEUERUNG MIT THERMOSTATFUNKTION

COMMANDE NUMÉRIQUE AVEC FONCTION DE THERMOSTAT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.10.2020 BE 202005697**

(43) Date of publication of application:
**13.04.2022 Bulletin 2022/15**

(73) Proprietor: **Niko NV
9100 Sint-Niklaas (BE)**

(72) Inventors:
• **VERBIEST, Nele
9100 Sint-Niklaas (BE)**
• **DE BOCK, Yannick
9120 Beveren (BE)**

• **DETAVERNIER, Gertjan
9800 Deinze (BE)**

(74) Representative: **Winger
Hundelgemsesteenweg 1116
9820 Merelbeke (BE)**

(56) References cited:
**EP-A1- 3 324 164     US-A1- 2017 023 272**

• **Na: "Smart Thermostat Localized Heat
Compensation for Ambient Temperature Sensing
Reference Design", , 31 December 2018
(2018-12-31), XP055790942, Retrieved from the
Internet:
URL:https://www.ti.com/lit/ug/tidudo1/tidu
do1.pdf?ts=1617021388217&ref_url=https%3A%
2F%2Fwww.google.com%2F [retrieved on
2021-03-29]**

EP 3 982 229 B1

**Description**

**Technical field of the invention**

The present invention relates to a digital control. More particularly, the present invention relates to a digital control with a thermostat function that is able to reliably measure the temperature.

**Background of the invention**

During the building of a house or other building, at the time it has to be decided where controls for lighting, heating and/or cooling, ventilation, ... have to come in a house or building, both the installer and the end user might not know yet which controls they want at what location. Moreover, the location of the controls or the number of controls at a certain location can change over time.

Another problem that can arise is that at a certain location, too many controls need to be provided. Currently, with classical push buttons, a situation can than occur where too many buttons are provided at one location. In such cases, an end user may have to provide stickers on which it is written which button is for controlling what function. This is not very aesthetic.

A solution to the above problem is the use of a so called digital control. Such a digital control may consist of a high quality display which has a similar size as a conventional switch or push button. Any number of required functions can be programmed and can be controlled with the digital control.

One of the functions that can, next to lighting, ventilation, blinds, ..., be controlled by means of such a digital control is a thermostat function. With this thermostat function, heat and/or cooling can be controlled with the digital control.

However, the temperature measured by the digital control can be influenced by its internal heating. Such internal heating can be the result of different events. This internal heating may has as a consequence that the temperature measured by the digital control is not correct. In that way, the thermostat may not be working properly.

For example, in US 2017/0023272 a solution is described for compensating for extra heating up of an HVAC controller because of wireless data transmitted to and from a wireless communication module. Therefore, a temperature offset is calculated which should compensate for that heating up. The temperature offset is determined by dividing the actual amount of wireless data communication by the maximum wireless data capable of being transmitted by the wireless communication module within a certain time frame and then multiply the scaled heat rise by a wireless gain to determine the wireless heat rise. According to embodiments of US 2017/0023272, the calculated compensation may be stored. According to such embodiments, when HVAC controller is turned on within a predetermined period after calculating the compensation, the calculated compensation is used. When the HVAC controller is turned on when that predetermined period is over, the calculated compensation is set to zero. Another event that can cause internal heating is heating up of the display of the digital control. This is a different heating up of a different component, and thus requires another way of compensation. Therefore, the compensation method described in US 2017/0023272 cannot be applied in case the internal heating up is caused by the heating up of the display.

**Summary of the invention**

It is an object of embodiments of the present invention to provide a digital control with a thermostat function that is able to reliably measure the temperature and consequently is able to correctly control the heating and/or cooling in a house or building.

The above objective is accomplished by a device and a method according to embodiments of the present invention.

The present invention provides a digital control comprising at least a thermostat function for controlling heating and/or cooling in at least one room of a house or building. The digital control further comprises a temperature sensor for measuring the temperature in the at least one room, and a central processing unit adapted for compensating for internal heating of the display of the digital control. The central processing unit is adapted for determining, at the time the digital control goes from an on-state to an off-state, the internal heating of the digital control according to quadratic function:

$$\text{Internal heating up (display)} = ax^2 + bx$$

wherein a and b are coefficients that depend on the used brightness of the display of the digital control and x is the time during which the display was in the on-state, correcting the measured temperature with the determined internal heating, and sending the corrected temperature to the display and to a remote heating and/or cooling unit for controlling heating and/or cooling in the at least one room.

According to embodiments of the invention, the central processing unit may further be adapted for determining heating up of the central processing unit during the duration that the display was in the on-state, the heating up of the central processing unit being determined by:

$$\text{Heating up (CPU)} = 0.0005*\text{y} + 0.167$$

wherein y is the sum of average percentages of the capacity of the central processing unit that is used during the duration that the display is in the on-state measured every 5 seconds during the duration that the display was in the on-state.

According to still further embodiments, the central processing unit may still further be adapted to determine the degree of cooling down of the display after the display has been put in the off state at a certain time according to:

$$\text{Cooling down} = \text{Heating up increase}*\text{e}^{(-0.002*z)}$$

wherein z is the duration since the start of the cooling down after the display has been put in the off state, and determine the difference between the internal heating up of the display and the cooling down of the display, to determine the remaining heating up of the display when the display is put in the on-state.

The digital control may furthermore comprise a separate 24V power supply for powering the digital control. According to other embodiments, the digital control may be powered by a bus wiring of a home automation system.

The present invention further provides a method for controlling heating and/or cooling in at least one room of a house or building by using a digital control according to embodiments of the invention. The digital control comprises a display, a temperature sensor and a central processing unit. The method comprises measuring the temperature in the at least one room, and compensating for internal heating of the display of the digital control. According to embodiments of the invention, compensation for internal heating of the display comprises, at the time the digital control goes from an on-state to an off-state, determining the internal heating of the display according to quadratic function:

$$\text{Internal heating up (display)} = \text{ax}^2 + \text{bx}$$

wherein a and b are coefficients that depend on the average brightness of the display of the digital control during the on-state, and x is the time during which the display was in the on-state, correcting the measured temperature with the determined internal heating, and displaying the corrected temperature on the display and/or using the corrected temperature for controlling heating and/or cooling in the at least one room.

By compensating for the internal heating of the display during the duration the display was in the on-state, a more reliable and correct temperature is obtained. Further, the use of a quadratic function for describing the internal heating up of the display has as an advantage that it allows very specifically to model or simulate the heating of the display over time, which leads to a very reliable method for compensating for the internal heating up of the display of the digital control. According to embodiments of the invention, the method may furthermore comprise taking into account heating up of the central processing unit during the duration that the display was in the on-state for correcting the measured temperature. The heating up of the central processing unit is determined by:

$$\text{Heating up (CPU)} = 0.0005*\text{y} + 0.167$$

wherein y is the sum of average percentages of the capacity of the central processing unit that is used during the duration that the display is in the on-state measured every 5 seconds during the duration that the display is in the on-state.

By additionally taken into account the heating up of the central processing unit, an even more reliable temperature can be obtained.

According to embodiments of the invention, the method may furthermore comprise taking into account cooling down of the display of the digital control after the display has been put in the off state for correcting the measured temperature, the cooling down following the exponential function:

$$\text{Cooling down} = \text{Heating up increase}*\text{e}^{(-0.002*z)}$$

wherein z is the duration since the start of the cooling down after the display has been put in the off state. The remaining heating up is then the difference between the internal heating up of the display and the cooling down of the display at a certain time after the display has been put in the off state.

Taking into account the cooling down of the display prevents from overcompensating for the internal heating up of the display. Also this adds to the reliability of the determined temperature. The internal heating of the display due to on-state and the additional heating up due to the central processing unit may, according to embodiments of the invention, be determined and kept track of separately.

According to still further embodiments of the invention, the method may furthermore comprise upon switching on the digital control, determining whether cooling down of the display is completed, and if cooling down of the display is not yet completed, determine the remaining heating up at a certain time and, at the time the digital control goes from an on-state to an off-state add this remaining heating up to the heating up of the display during the duration that the display was in the on-state.

## Brief description of the drawings

It has to be noted that same reference signs in the different figures refer to same, similar or analogous elements.

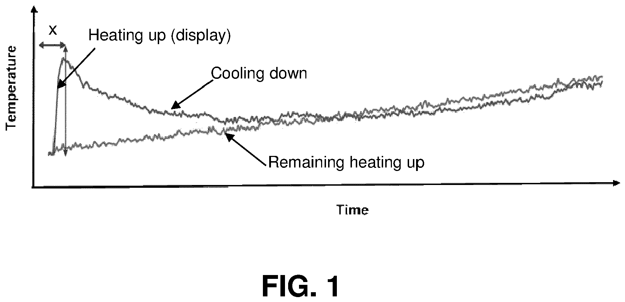

Fig. 1 schematically illustrates the course of heating up and cooling down of a display, as assumed in the method according to embodiments of the present invention.

## Description of illustrative embodiments

In the description different embodiments will be used to describe the invention. Therefore reference will be made to different drawings. It has to be understood that these drawings are intended to be non-limiting, the invention is only limited by the claims. The drawings are thus for illustrative purposes, the size of some of the elements in the drawings may be exaggerated for clarity purposes.

The term "comprising" is not to be interpreted as limiting the invention in any way. The term "comprising", used in the claims, is not intended to be restricted to what means is described thereafter; it does not exclude other elements, parts or steps.

A digital control is a completely customisable control display for a home automation system with a user-friendly interface featuring clear symbols for controlling lighting, blinds, heating and/or cooling, ventilation, etc.. The display may be automatically activated when a user comes near, or when a user waves his or her hand. That way, lights can be put on/off or dimmed, moods can be set, ventilation modes can be set, blinds can be adjusted to a desired position, temperature can be set, all in one operation. When there is no action for a predefined period of time, the digital control automatically goes to the off-state.

A digital control can be programmed according to a user's needs, and can be easily reprogrammed whenever those needs change. This can easily done via an app on a smartphone or a tablet. In that way a user can choose which controls are displayed and where they are displayed on the display, but also the way that can be navigated through the display.

The digital control can be easily mounted in a standard flush-mounting box and can either be powered by a separate 24V DC supply or via a bus wiring. The digital display communicates via the wireless home network with the home automation system. The display communicates via your wireless home network with the rest of your Niko Home Control system.

When the digital control is adapted to control a heating and/or cooling system, the digital control comprises a temperature sensor. As already mentioned above, a major drawback of the digital control is that the display heats up when it is in the on-state. Because of that, the temperature measured by the temperature sensor may be influenced by that heating up and may not give the correct temperature. As a matter of fact, the temperature measured may be higher than the actual temperature because of the internal heating of the display.

Therefore, the present invention provides a digital control comprising at least a thermostat function for controlling heating and/or cooling in at least one room of a house or building and which is able to reliably measure the temperature and consequently is able to correctly control the heating and/or cooling in a house or building, and a method for determining the temperature in at least one room of a house or building by using a digital control and/or using that temperature for controlling heating and/or cooling in the at least one room.

The digital control comprises a display, a temperature sensor and a central processing unit. The method comprises measuring the temperature in the at least one room, and compensating for internal heating of the display of the digital control. According to embodiments of the invention, compensating for internal heating of the display comprises at the time the digital control goes from an on-state to an off-state, determining the internal heating of the display according to quadratic function:

$$\text{Internal heating up (display)} = ax^2 + bx \qquad (1)$$

wherein a and b are coefficients that depend on the average brightness of the display of the digital control during the on-state, and x is the time during which the display was in the on-state, correcting the measured temperature with the determined internal heating, and displaying the corrected temperature on the display and/or using the corrected temperature for controlling heating and/or cooling in the at least one room.

An advantage of a digital control and a method according to embodiments of the invention is that is able to provide a reliable temperature by taking into account the internal heating of the digital control. Further, the use of a quadratic function for describing the internal heating up of the display has as an advantage that it allows very specifically to model or simulate the heating of the display over time, which leads to a very reliable method for compensating for the internal heating up of the display of the digital control.

The present invention is based on the fact that, when the display is on, there is no prediction of the internal heating and there is thus also no compensation for that internal heating. The present invention thus assumes that there is only internal heating when the display, and thus the digital control, is on. After the display is turned off, there is no heating anymore. Hence, when the display is turned off, the impact of the duration that the display was on is calculated.

Fig. 1 schematically illustrates the course of heating up and cooling down of a display, as assumed by the present invention. According to the present invention, the heating up duration is equal to the duration x that the display was on. Hence, the present invention is based on the insight that the heating up of the display depends on the duration x that the display was on and on the average brightness during the duration x that the display was on. According to further embodiments, for further improving the determination of the temperature, it was found that compensation for the heating up of the central processing unit during the duration x that the display was on, can even more improve the determination of a reliable temperature.

Hence, according to the invention, for determining a reliable temperature in at least one room of a house or a building, first the temperature in the at least one room is measured. Then, this measured temperature is corrected by compensating for the internal heating up of the display. This is done as follows.

It was found that the internal heating up of the display follows a quadratic curve:

$$\text{Internal heating up (display)} = ax^2 + bx \qquad (1)$$

The coefficients a and b in equation (1) depend on the average brightness of the display during the on-state:

$$a = -0.00000002 * \text{mean\_brightness} - 0.000003 \qquad (2)$$

$$b = 0.00003 * \text{mean\_brightness} + 0.0049 \qquad (3)$$

These coefficients a and b can be determined during tests for different mean brightnesses. Once the values for a and b for those different brightnesses are determined for a particular type of display, they are known and fixed and can be stored in a memory of the central processing unit. Hence, when a user is activating the digital control by approaching it or by waving his or her hand, the display is put in its on-state. The user can use the digital control. During this use, the display is internally heating up. When there is no activity any more from the user for some time, the display is automatically turning back to the off-state. At that time, compensation is done for the internal heating up of the display. The internal heating up of the display is determined using equation (1). By deducting the internal heating up from the measured temperature, a corrected temperature is obtained:

$$T_{corr} = T_{Meas} - \text{Internal heating up (display)} \qquad (4)$$

wherein $T_{corr}$ is the corrected temperature and $T_{Meas}$ is the measured temperature.

This corrected temperature ($T_{corr}$) can then be displayed on the display of the digital control and/or can be used for controlling heating and/or cooling in the at least one room.

By taking into account the internal heating up of the display during the time it is in the on-state, a reliable value of the temperature in the at least one room can be obtained.

According to embodiments of the invention, the temperature can be further corrected by further taking into account the heating up of the central processing unit (CPU) during the time that the digital control is activated, thus during the time that the display is in the on-state. This depends on the percentage capacity of the central processing unit (CPU) that is used. When the average percentage of the capacity of the central processing unit (CPU) that is used is less than 10 during the duration x that the display is in the on-state, there is no correction needed for the heating up increase due to the central processing unit (CPU). When the average percentage of the capacity of the central processing unit (CPU) that is used is larger than 10 during the duration x that the display is in the on-state, the additional heating up due to the central processing unit (CPU) may be taken into account. The additional heating up due to the central processing unit (CPU) follows a linear function and is equal to

$$\text{Heating up (CPU) } 0.0005*y + 0.167 \tag{5}$$

wherein y is the sum of average percentages of the capacity of the central processing unit (CPU) that is used during the duration (x) that the display is in the on-state (measured every 5 seconds) during the duration x that the display is in the on-state.

The average percentage of the capacity of the central processing unit (CPU) depends on the number of applications are used at the same time on the digital control. For example, the higher the number of applications run on the digital control at the same time, the higher the percentage CPU capacity usage with respect to its total capacity will be.

The degree of heating up due to the central processing unit has then to be deducted from the measured temperature. Hence, according to these embodiments, the temperature is determined by:

$$T_{\text{Corr}} = T_{\text{Meas}} - \text{heating up (display)} - \text{heating up (CPU)} \tag{6}$$

wherein $T_{corr}$ is the corrected temperature and $T_{Meas}$ is the measured temperature.

Again, this corrected temperature ($T_{corr}$) can then be displayed on the display of the digital control and/or can be used for controlling heating and/or cooling in the at least one room. According to embodiments of the invention, the internal heating of the display due to the on-state and the additional heating up due to the central processing unit (CPU) may be determined and kept track of separately.

According to still further embodiments of the invention, the measured temperature $T_{Meas}$ can still be further corrected by taking into account the cooling off of the display. When the display is turned off, the display starts cooling down. It was found that the cooling down of the display follows an exponential curve and depends on the degree of heating up during the on-state of the display, and thus depends on the time that the display was in the on-state. The cooling down follows the following exponential curve (see also Fig. 1):

$$\text{Cooling down} = \text{Heating up increase}*e^{(-0.002*z)} \tag{7}$$

wherein heating up increase can be either heating up increase only due to the internal heating up of the display or heating up increase due to both the internal heating up of the display and the heating up of the CPU, and wherein z is the duration since the start of the cooling down after the display has been put in the off state. Hence, the corrected temperature (Tcorr) then equals:

$$T_{corr} = T_{\text{Meas}} - \text{Internal heating up (display)} + \text{Cooling down} \tag{8}$$

when only the internal heating of the display is taken into account, and

$$T_{corr} = T_{\text{Meas}} - \text{heating up (display)} - \text{heating up (CPU)} + \text{Cooling down} \tag{9}$$

when both the internal heating up of the display and the heating up due to the CPU is taken into account.

In both equations (8) and (9) $T_{corr}$ is the corrected temperature and $T_{Meas}$ is the measured temperature.

As the digital display is used for controlling a plurality of functions, as explained above, according to embodiments of the invention, the digital control may be put on and off many times shortly after one another. For example, the display has been in the on-state for 30 seconds, then goes to the off-state for a few minutes and then goes again to the on-state for 60 seconds. This may have as a consequence that, when the digital control is turned on shortly after it has turned to the off-state, cooling down may not be completely. Hence, again putting the display in the on-state, causes the display to a further heating up on top of a higher internal temperature at that time. Hence, according to embodiments of the invention, the method for compensating for the internal heating of the display may take this into account. According to embodiments of the invention, at any time the remaining heating up, as illustrated by the lower curve in Fig. 1, is kept track of.

As the curve for internal heating up during the duration x that the display is in the on-state is quadratic (see equation (1)), the added degree of heating up due to again putting the display in the on-state before cooling down is completed cannot just be added to the still existing heating up. It has been found that the added degree of heating up decreases when the duration is longer. In other words, when there is already some heating up, the influence of a new period that the display is in the on-state is lower. To take that into account, it has to be found where in the curve as illustrated in Fig. 1 the situation is along the cooling down curve, when a new cycle of on-state occurs. As mentioned above, the heating up of the display during the duration that the display is in the on-state for the first time after completely cooling down follows the quadratic curve according to equation (1). If the heating up according to the display being in the on-state for the first time is known, the corresponding duration $x_1$ can be calculated using equation (1). This duration should then be added to the subsequent duration of the on-state of the display.

**Claims**

1. Digital control comprising at least a thermostat function for controlling heating and/or cooling in at least one room of a house or building, the digital control further comprising:

   - a display,
   - a temperature sensor for measuring the temperature in the at least one room,
   - a central processing unit adapted for:

      - compensating for internal heating of the display of the digital control,
      - correcting the measured temperature with the determined internal heating, and
      - sending the corrected temperature to the display and to a remote heating and/or cooling unit for controlling heating and/or cooling in the at least one room,

   **characterized in that** the central processing unit is further adapted for determining, at the time the digital control goes from an on-state to an off-state, the internal heating of the display of the digital control according to quadratic function:

   $$\text{Internal heating up (display)} = ax^2 + bx$$

   wherein a and b are coefficients that depend on the used brightness of the display of the digital control and x is the time during which the display was in the on-state.

2. Digital control according to claim 1, wherein the central processing unit is further adapted for determining heating up of the central processing unit (CPU) during the duration (x) that the display is in the on-state, the heating up of the central processing unit being determined by:

   $$\text{Heating up (CPU)} = 0.0005 * y + 0.167$$

   wherein y is the sum of average percentages of the capacity of the central processing unit (CPU) that is used during the duration (x) that the display is in the on-state measured every 5 seconds during the duration (x) that the display is in the on-state.

3. Digital control according to claim 1 or 2, wherein the central processing unit is further adapted to

   - determine the degree of cooling down of the display at a certain time after the display has been put in the off state according to:

   $$\text{Cooling down} = \text{Heating up increase} * e^{(-0.002 * z)}$$

wherein z is the duration since the start of the cooling down after putting the display in the off state, and
- determine the difference between the internal heating up of the display and the cooling down of the display, to determine the remaining heating up of the display when the display is put in the on-state.

4. Digital control according to any of the previous claims, wherein the digital control furthermore comprises a separate 24V power supply for powering the digital control.

5. Digital control according to any of claims 1 to 3, wherein the digital control is powered by a bus wiring of a home automation system.

6. Method for controlling heating and/or cooling in at least one room of a house or building by using a digital control according to any of the previous claims, the method comprising:

   - measuring a temperature in the at least one room, and
   - compensating for internal heating of a display of the digital control,
   - correcting the measured temperature with the determined internal heating, and
   - displaying the corrected temperature on the display, and
   - using the corrected temperature for controlling heating and/or cooling in the at least one room,

   **characterized in that** compensation for internal heating of the display of the digital control comprises:

   - at the time the digital control goes from an on-state to an off-state, determining the internal heating of the display according to quadratic function:

$$\text{Internal heating up (display)} = ax^2 + bx$$

   wherein a and b are coefficients that depend on the average brightness of the display of the digital control during the on-state, and x is the time during which the display was in the on-state.

7. Method according to claim 6, wherein the method furthermore comprises taking into account heating up of the central processing unit (CPU) during the duration (x) that the display is in the on-state for correcting the measured temperature, the heating up of the central processing unit (CPU) being determined by:

$$\text{Heating up (CPU)} = 0.0005*y + 0.167$$

   wherein y is the sum of average percentages of the capacity of the central processing unit (CPU) that is used during the duration (x) that the display is in the on-state measured every 5 seconds during the duration (x) that the display is in the on-state.

8. Method according to claim 6 or 7, wherein the method furthermore comprises taking into account cooling down of the display of the digital control after the display has been put in the off state for correcting the measured temperature, the cooling down following the exponential function:

$$\text{Cooling down} = \text{Heating up increase}*e^{(-0.002*z)}$$

   wherein z is the duration since the start of the cooling down after the display has been put in the off state, the remaining heating up then being the difference between the internal heating up of the display and the cooling down of the display at a certain time.

9. Method according to claim 8, wherein the internal heating of the display due to on-state and the additional heating up due to the central processing unit are determined and kept track of separately.

10. Method according to any of claims 6 to 9, wherein the method furthermore comprises:

   - upon switching on the digital control, determining whether cooling down of the display is completed, and

- if cooling down is not completed, determine the remaining heating up and, at the time the digital control goes from an on-state to an off-state add it to the heating up of the display during the duration (x) that the display was in the on-state.

**Patentansprüche**

1. Digitale Steuerung, umfassend mindestens eine Thermostatfunktion zum Steuern von Erwärmung und/oder Kühlung in mindestens einem Raum eines Hauses oder Gebäudes, die digitale Steuerung ferner umfassend:

   - eine Anzeige,
   - einen Temperatursensor zum Messen der Temperatur in dem mindestens einen Raum,
   - eine zentrale Verarbeitungseinheit, die angepasst ist zum:

     - Kompensieren der internen Erwärmung der Anzeige der digitalen Steuerung,
     - Korrigieren der gemessenen Temperatur mit der bestimmten internen Erwärmung, und
     - Senden der korrigierten Temperatur an die Anzeige und an eine entfernte Wärme- und/oder Kühleinheit zum Steuern von Erwärmung und/oder Kühlung in dem mindestens einen Raum,

   **dadurch gekennzeichnet, dass** die zentrale Verarbeitungseinheit ferner angepasst ist zum Bestimmen, zu dem Zeitpunkt, zu dem die digitale Steuerung von einem Ein-Zustand in einen Aus-Zustand übergeht, der internen Erwärmung der Anzeige der digitalen Steuerung gemäß quadratischer Funktion:

$$\text{Interne Erwärmung (Anzeige)} = ax^2 + bx$$

   wobei a und b Koeffizienten sind, die von der verwendeten Helligkeit der Anzeige der digitalen Steuerung abhängen und x die Zeit ist, während der die Anzeige in dem Ein-Zustand war.

2. Digitale Steuerung nach Anspruch 1, wobei die zentrale Verarbeitungseinheit ferner angepasst ist zum Bestimmen der Erwärmung der zentralen Verarbeitungseinheit (CPU) während der Dauer (x), in der sich die Anzeige in dem Ein-Zustand befindet, wobei die Erwärmung der zentralen Verarbeitungseinheit bestimmt wird durch:

$$\text{Erwärmung (CPU)} = 0{,}0005 * y + 0{,}167$$

   wobei y die Summe von durchschnittlichen Prozentsätzen der Kapazität der zentralen Verarbeitungseinheit (CPU) ist, die während der Dauer (x) verwendet wird, in der sich die Anzeige in dem Ein-Zustand befindet, gemessen alle 5 Sekunden während der Dauer (x), in der sich die Anzeige in dem Ein-Zustand befindet.

3. Digitale Steuerung nach Anspruch 1 oder 2, wobei die zentrale Verarbeitungseinheit ferner angepasst ist zum

   - Bestimmen des Abkühlgrads der Anzeige zu einer bestimmten Zeit, nachdem die Anzeige in den Aus-Zustand versetzt wurde, gemäß:

$$\text{Abkühlung} = \text{Erwärmung erhöhen} * e^{(0{,}002 * z)}$$

   wobei z die Dauer seit dem Beginn der Abkühlung nach dem Versetzen der Anzeige in den Aus-Zustand ist, und
   - Bestimmen der Differenz zwischen der internen Erwärmung der Anzeige und der Abkühlung der Anzeige, um die verbleibende Erwärmung der Anzeige zu bestimmen, wenn die Anzeige in den Ein-Zustand versetzt wird.

4. Digitale Steuerung nach einem der vorstehenden Ansprüche, wobei die digitale Steuerung ferner eine separate 24V-Stromversorgung zum Antreiben der digitalen Steuerung umfasst.

5. Digitale Steuerung nach einem der Ansprüche 1 bis 3, wobei die digitale Steuerung durch eine Busverdrahtung eines Heimautomatisierungssystems angetrieben wird.

6. Verfahren zum Steuern von Erwärmung und/oder Kühlung in mindestens einem Raum eines Hauses oder Gebäudes durch Verwenden einer digitalen Steuerung nach einem der vorstehenden Ansprüche, das Verfahren umfassend:

- Messen einer Temperatur in dem mindestens einen Raum, und
- Kompensieren der internen Erwärmung einer Anzeige der digitalen Steuerung,
- Korrigieren der gemessenen Temperatur mit der bestimmten internen Erwärmung, und
- Anzeigen der korrigierten Temperatur auf der Anzeige, und
- Verwenden der korrigierten Temperatur zum Steuern von Erwärmung und/oder Kühlung in dem mindestens einen Raum,

**dadurch gekennzeichnet, dass** Kompensation der internen Erwärmung der Anzeige der digitalen Steuerung umfasst:

- zu dem Zeitpunkt, zu dem die digitale Steuerung von einem Ein-Zustand in einen Aus-Zustand übergeht, Bestimmen der internen Erwärmung der Anzeige gemäß quadratischer Funktion:

$$\text{Interne Erwärmung (Anzeige)} = ax^2 + bx$$

wobei a und b Koeffizienten sind, die von der durchschnittlichen Helligkeit der Anzeige der digitalen Steuerung während des Ein-Zustands abhängen, und x die Zeit ist, während der die Anzeige in dem Ein-Zustand war.

7. Verfahren nach Anspruch 6, wobei das Verfahren ferner ein Berücksichtigen der Erwärmung der zentralen Verarbeitungseinheit (CPU) während der Dauer (x), in der sich die Anzeige in dem Ein-Zustand befindet, zum Korrigieren der gemessenen Temperatur umfasst, wobei die Erwärmung der zentralen Verarbeitungseinheit (CPU) bestimmt wird durch:

$$\text{Erwärmung (CPU)} = 0{,}0005 * y + 0{,}167$$

wobei y die Summe von durchschnittlichen Prozentsätzen der Kapazität der zentralen Verarbeitungseinheit (CPU) ist, die während der Dauer (x) verwendet wird, in der sich die Anzeige in dem Ein-Zustand befindet, gemessen alle 5 Sekunden während der Dauer (x), in der sich die Anzeige in dem Ein-Zustand befindet.

8. Verfahren nach Anspruch 6 oder 7, wobei das Verfahren ferner das Berücksichtigen der Abkühlung der Anzeige der digitalen Steuerung, nachdem die Anzeige in den Aus-Zustand versetzt wurde, zum Korrigieren der gemessenen Temperatur umfasst, wobei die Abkühlung der exponentiellen Funktion folgt:

$$\text{Abkühlung} = \text{Erwärmung erhöhen} * e^{(0{,}002 * z)}$$

wobei z die Dauer seit dem Beginn der Abkühlung, nachdem die Anzeige in den Aus-Zustand versetzt wurde, ist, die verbleibende Erwärmung dann die Differenz zwischen der internen Erwärmung der Anzeige und der Abkühlung der Anzeige zu einem bestimmten Zeitpunkt ist.

9. Verfahren nach Anspruch 8, wobei die interne Erwärmung der Anzeige aufgrund des Ein-Zustands und der zusätzlichen Erwärmung aufgrund der zentralen Verarbeitungseinheit separat bestimmt und verfolgt werden.

10. Verfahren nach einem der Ansprüche 6 bis 9, wobei das Verfahren ferner umfasst:

- beim Einschalten der digitalen Steuerung, Bestimmen, ob die Abkühlung der Anzeige abgeschlossen ist, und
- falls die Abkühlung nicht abgeschlossen ist, Bestimmen der verbleibenden Erwärmung, und zu dem Zeitpunkt, zu dem die digitale Steuerung von einem Ein-Zustand in einen Aus-Zustand übergeht, Hinzufügen davon zu der Erwärmung der Anzeige während der Dauer (x), in der sich die Anzeige in dem Ein-Zustand befindet.

**Revendications**

1. Commande numérique comprenant au moins une fonction de thermostat permettant de commander le chauffage et/ou le refroidissement dans au moins une pièce d'une maison ou d'un bâtiment, la commande numérique comprenant en outre :

   - un écran,
   - un capteur de température permettant de mesurer la température dans l'au moins une pièce,
   - une unité centrale de traitement adaptée pour :

      - compenser le chauffage interne de l'écran de la commande numérique,
      - corriger la température mesurée avec le chauffage interne déterminé, et
      - envoyer la température corrigée à l'écran et à une unité de chauffage et/ou de refroidissement à distance pour commander le chauffage et/ou le refroidissement dans l'au moins une pièce,

   **caractérisée en ce que** l'unité centrale de traitement est en outre adaptée pour déterminer, au moment où la commande numérique passe d'un état activé à un état désactivé, le chauffage interne de l'écran de la commande numérique selon la fonction quadrature :

   $$\text{Chauffage interne (écran)} = ax^2 + bx$$

   a et b étant des coefficients qui dépendent de la luminosité utilisée de l'écran de la commande numérique et x étant le temps pendant lequel l'écran a été activé.

2. Commande numérique selon la revendication 1, dans laquelle l'unité centrale de traitement est en outre adaptée pour déterminer le chauffage de l'unité centrale de traitement (CPU) pendant la durée (x) où l'écran est activé, le chauffage de l'unité centrale de traitement étant déterminé par :

   $$\text{Chauffage (CPU)} = 0{,}0005 * y + 0{,}167$$

   y étant la somme des pourcentages moyens de la capacité de l'unité centrale de traitement (CPU) qui est utilisée pendant la durée (x) où l'écran est activé, mesurée toutes les 5 secondes pendant la durée (x) où l'écran est activé.

3. Commande numérique selon la revendication 1 ou 2, dans laquelle l'unité centrale de traitement est en outre adaptée pour

   - déterminer le degré de refroidissement de l'écran à un certain moment après que l'écran a été désactivé selon :

   $$\text{Refroidissement} = \text{Augmentation du chauffage} * e^{(0\,002 * z)}$$

   z étant la durée écoulée depuis le début du refroidissement après la désactivation de l'écran, et
   - déterminer la différence entre le chauffage interne de l'écran et le refroidissement de l'écran, pour déterminer le chauffage restant de l'écran lorsque celui-ci est désactivé.

4. Commande numérique selon l'une quelconque des revendications précédentes, dans laquelle la commande numérique comprend en outre une alimentation électrique à 24 V séparée pour alimenter la commande numérique.

5. Commande numérique selon l'une quelconque des revendications 1 à 3, dans laquelle la commande numérique est alimentée par un câblage en bus d'un système domotique.

6. Procédé permettant de commander le chauffage et/ou le refroidissement dans au moins une pièce d'une maison ou d'un bâtiment à l'aide d'une commande numérique selon l'une quelconque des revendications précédentes, le procédé comprenant :

   - la mesure d'une température dans l'au moins une pièce, et

- la compensation de chauffage interne d'un écran de la commande numérique,
- la correction de la température mesurée avec le chauffage interne déterminé, et
- l'affichage de la température corrigée sur l'écran, et
- l'utilisation de la température corrigée pour commander le chauffage et/ou le refroidissement dans l'au moins une pièce,

**caractérisé en ce que** la compensation de chauffage interne de l'écran de la commande numérique comprend :

- au moment où la commande numérique passe d'un état activé à un état désactivé, la détermination du chauffage interne de l'écran selon une fonction quadratique :

$$\text{Chauffage interne (écran)} = ax^2 + bx$$

a et b étant des coefficients qui dépendent de la luminosité moyenne de l'écran de la commande numérique pendant l'état activé, et x étant le temps pendant lequel l'écran était activé.

7. Procédé selon la revendication 6, dans lequel le procédé comprend en outre la prise en compte du chauffage de l'unité centrale de traitement (CPU) pendant la durée (x) où l'écran est activé pour corriger la température mesurée, le chauffage de l'unité centrale de traitement (CPU) étant déterminé par :

$$\text{Chauffage (CPU)} = 0{,}0005*y + 0{,}167$$

y étant la somme des pourcentages moyens de la capacité de l'unité centrale de traitement (CPU) qui est utilisée pendant la durée (x) où l'écran est activé, mesurée toutes les 5 secondes pendant la durée (x) où l'écran est activé.

8. Procédé selon la revendication 6 ou 7, dans lequel le procédé comprend en outre la prise en compte du refroidissement de l'écran de la commande numérique après que l'écran a été désactivé pour corriger la température mesurée, le refroidissement suivant la fonction exponentielle :

$$\text{Refroidissement} = \text{Augmentation du chauffage}*e^{(0\,002*z)}$$

z étant la durée écoulée depuis le début du refroidissement après la désactivation de l'écran,
le chauffage restant étant alors la différence entre le chauffage interne de l'écran et le refroidissement de l'écran à un certain moment.

9. Procédé selon la revendication 8, dans lequel le chauffage interne de l'écran causé par l'état activé et le chauffage supplémentaire causé par l'unité centrale de traitement sont déterminés et suivis de manière séparée.

10. Procédé selon l'une quelconque des revendications 6 à 9, dans lequel le procédé comprend en outre :

- lors de la commutation sur la commande numérique, la détermination du fait de savoir si le refroidissement de l'écran est terminé, et
- si le refroidissement n'est pas terminé, la détermination du chauffage restant et, au moment où la commande numérique passe d'un état activé à un état désactivé, son ajout au chauffage de l'écran pendant la durée (x) où l'écran était activé.

FIG. 1

**EP 3 982 229 B1**

## REFERENCES CITED IN THE DESCRIPTION

### Patent documents cited in the description

- US 20170023272 A